# EUROPÄISCHE PATENTSCHRIFT

(11) **EP 0 513 114 B1**
(45) Veröffentlichungstag und Bekanntmachung des Hinweises auf die Patenterteilung: **06.10.1993**
(21) Anmeldenummer: 91903407.4
(22) Anmeldetag: 31.01.1991
(51) Int. Cl.: A61J 17/00

(54) **SCHNULLER**
CHILD'S DUMMY
TETINE

(30) Priorität: 09.02.1990 AT 292/90
(43) Veröffentlichungstag der Anmeldung: 19.11.1992
(73) Patentinhaber: MAM BABYARTIKEL GESELLSCHAFT M.B.H., A-1160 Wien (AT)
(72) Erfinder: RÖHRIG, Peter, A-1160 Wien (AT)
(74) Vertreter: Weinzinger, Arnulf, Dipl.-Ing.
(86) Internationale Anmeldenummer: AT9100015
(87) Internationale Veröffentlichungsnummer: WO9111982

(56) Entgegenhaltungen:
- EP-A- 0 116 003
- DE-A- 3 241 845
- DE-C- 3 316 824
- DE-C- 3 347 876
- US-A- 1 826 943
- US-A- 4 545 378

## Beschreibung

### Gebiet der Erfindung

Die Erfindung betrifft einen Schnuller mit einem Sauger, der in einer mittigen Öffnung eines Schildes befestigt ist, der im Abstand von dieser mittigen Öffnung Durchbrechungen aufweist.

### Zugrundeliegender Stand der Technik

Ein derartiger Schnuller ist sowohl aus der AT-B-379 508 als auch aus der US-A-4545378 bekannt. Dabei bilden die im gitterförmigen Schnullerschild vorgesehenen Durchbrechungen Speichelabfluß- und Lufttrocknungs- sowie Notatmungsöffnungen. Es hat sich gezeigt, daß Reizungen, Rötungen und Entzündungen der Haut des Kleinkindes im Mundbereich beträchtlich reduziert werden können, wenn mit diesen Durchbrechungen ein Speichelabfluß sowie ein Trocknen der Haut im Mundbereich sichergestellt wird. Hiefür werden beim bekannten Schnuller relativ große Durchbrechungen vorgesehen, wobei dadurch aber die Stabilität des Schnullerschildes nachteilig beeinflußt sowie überdies die Anlage des Schnullerschildes im Mundbereich derart beeinträchtigt wird, daß der Saugkomfort verringert wird. Wenn andererseits die Durchbrechungen kleiner vorgesehen werden, ergibt sich eine wesentlich verminderte Wirkung, was das Verhindern von Reizungen, Rötungen und Entzündungen anlangt.

In diesem Zusammenhang ist auszuführen, daß Untersuchungen ergaben, daß dermatologische Veränderungen der Gesichtshaut in der Mundumgebung von Säuglingen und Kleinkindern besonders durch Mykosen, also Pilzbefall, verursacht werden, wobei es insbesondere Sproßpilze, weniger jedoch Schimmelpilze sind, die für diese Hautveränderungen verantwortlich zu machen sind. Demzufolge ist es besonders wichtig, einen möglichst guten Abfluß von Speichel aus der Mundumgebung der Kinder sowie eine möglichst gute Belüftung und damit Trockenhaltung dieser Hautpartien zu erreichen, da dann, wie die Untersuchungen ergaben, ein deutlich geringerer Pilzbefall erfolgt.

### Zusammenfassung der Erfindung

Es ist daher Aufgabe der vorliegenden Erfindung, einen Schnuller der eingangs angeführten Art zu schaffen, der einerseits eine gute Speichelabführung und Trockenhaltung für die Mundpartie sicherstellt und andererseits doch eine ausreichende Stabilität des Schnullerschildes gewährleistet, wobei insbesondere auch das Anliegen der Lippen des Kleinkindes an stabilen vollen Flächen des Schnullerschilder erreicht werden soll, so daß auch ein Vqrquellen von Teilen der Lippen durch Durchbrechungen vermieden wird.

Der erfindungsgemäße Schnuller der eingangs erwähnten Art ist dadurch gekennzeichnet, daß der Schild auf der beim Gebrauch dem Mund zugewandten Innenseite radial außerhalb der mit den Durchbrechungen versehenen Zone eine mit Noppen versehene Zone aufweist.

Die Erfindung basiert auf der Erkenntnis, daß zur Lösung der gestellten Aufgabe an jenem Teil des gesamten Schnullers angesetzt werden muß, der mit den kritischen Zonen im Mundbereich in Kontakt gelangt, also am Schnullerschild. Dabei wurde gefunden, daß eine Noppenstruktur an der mundseitigen Fläche des Schildes zusammen mit an geeigneter Stelle angebrachten Durchbrechungen, die Speichelabfluß- bzw. Belüftungsöffnungen bilden, eine deutlich verbesserte Trockenhaltung der Mundumgebung im Vergleich zu früheren Schnullern erreichen läßt. Hierbei bewirken die von der Schildfläche vorspringenden, erhabenen Noppen, daß die Haut nur bereichsweise mit dem Schildmaterial, nämlich den Noppen, in Kontakt kommt, wobei sich diese Hautbereiche durch die Saug- und Kaumotorik bei Verwendung des Schnullers ständig örtlich ändern, so daß alle Hautbereiche laufend abtrocknen können. Auch kann restlicher Speichel, der nicht durch die im Schild weiter innen vorgesehenen Durchbrechungen abgeflossen ist, zwischen den Noppen problemlos nach außen abfließen, was ebenfalls das Abtrocknen der Haut im Mundbereich des Kindes begünstigt.

Es sei erwähnt, daß aus der EP-B-116 003 ein Sauger in Kombination mit einem Beißring bekannt ist, wobei der Beißring selbst mit einem Teil zur Fixierung des Saugers herangezogen ist. Der Beißring ist dabei auf beiden Seiten in an sich für Beißringe herkömmlicher Weise mit einer Noppenstruktur versehen, wobei das Material des Beißringes, anders als ein Schnullerschild, ausreichend weich für diese Beißfunktion ist.

Eine besonderes vorteilhafte Ausführungsform des erfindungsgemäßen Schnullers ist dadurch gekennzeichnet, daß die mit den Noppen versehene Zone radial außerhalb der mit den Durchbrechungen versehenen Zone unmittelbar an letztere anschließt, jedoch radial innerhalb dieser mit den Durchbrechungen versehene Zone eine die mittigen Öffnungen für den Sauger umgebende glatte, in Ansicht ungefähr ovale Schildzone vorgesehen ist. Dadurch wird einerseits eine optimale Speichelableitung und Hautabtrocknung sichergestellt, andererseits jedoch auch das Hervorquellen der Lippen durch die Durchbrechungen verhindert, wodurch, wegen des Abschlusses der Lippen, in der Folge die Nasenatmung des Kindes gefördert wird. Demgemäß ist es hier auch besonders vorteilhaft, wenn die größte Erstreckung der ungefähr ovalen, glatten Schildzone in der Längsachse des oval bis lemniskatenförmig ausgeführten Schildes liegt.

Für den gewünschten Speichelabfluß- und Trockungseffekt ist es sodann auch von Vorteil, wenn sich die mit den Noppen versehene Zone im wesentlichen bis an den Rand des Schildes erstreckt.

Die Größe, Form, Anzahl und Verteilung der Noppen ist beim erfindungsgemäßen Schnuller so zu wählen, daß einerseits ein ausreichender und sanfter Kontakt des Schnullerschildes mit der Haut gewährleistet wird, so daß etwa eine mechanische Reizung der Haut durch Reiben von Rändern vermieden wird, und daß andererseits zwischen den Noppen genügend Raum für die Speichelabführung und die Hauttrocknung belassen ist. Besonders günstig haben sich bei Versuchen Ausbildungen erwiesen, bei denen die Noppen die Form von Zylindern mit kreisförmiger oder mit elliptischer Basis haben. Andererseits können die Noppen auch eine prismatische Form, z.B. mit quadratischer, rechteckiger, dreieckiger oder rautenförmiger Basis, haben. Für die Vermeidung von Reizungen ist es dabei günstig, wenn die Oberfläche der Noppen glatt ist. Auch ist es hier vorteilhaft, wenn die Noppen abgerundete Kanten und Ränder haben. Um weiters die Noppen der konkaven Krümmung des Schnullerschildes anzupassen, so daß eine gleichmäßige Anlage des Schnullerschildes auch im Bereich der mit den Noppen versehenen Zone an der Haut erreicht wird, ist es ferner von Vorteil, wenn alle Noppen im wesentlichen gleich hoch sind.

Aus Herstellungsgründen ist es schließlich günstig, wenn die Noppen aus dem Material des Schildes ausgeformt sind. Mit einer derartigen einteiligen Formung der Noppen am Schnullerschild können auch die erwähnten abgerundeten Kanten und Ränder der Noppen besonders leicht erreicht werden, wobei auch ein allmählicher, gerundeter Übergang von den Noppen in die eigentliche Schildfläche erzielt werden kann.

An sich wäre es im übrigen auch denkbar, die Noppen ungefähr halbkugelförmig oder warzenartig auszubilden.

### Kurzbeschreibung der Zeichnung

Die Erfindung wird nachstehend anhand von in der Zeichnung veranschaulichten Ausführungsbeispielen, auf die sie jedoch nicht beschränkt sein soll, noch weiter erläutert. Es zeigen:
Fig. 1 einen Schnuller im Längsschnitt;
Fig. 2 einen Schnullerschild in Ansichten von außen bzw. innen, wobei die linke Hälfte der Fig. 2 eine Ansicht der vom Mund abgewandten Seite des Schnullerschildes und die rechte Hälfte der Fig. 2 eine Ansicht der dem Mund zugewandten Seite des Schnullerschilds veranschaulicht;
Fig. 3 eine Seitenansicht des Schnullerschildes, teilweise geschnitten;
Fig. 4 einen Schnitt durch den Schnullerschild gemäß der Linie IV-IV in Fig. 2; und
Fig. 5 in einer Teildraufsicht ähnlich der rechten Hälfte von Fig. 2 einen Schnullerschild mit gegenüber der Ausführungsform von Fig. 2 modifizierten Noppen.

### Detaillierte Beschreibung der bevorzugten Ausführungsform

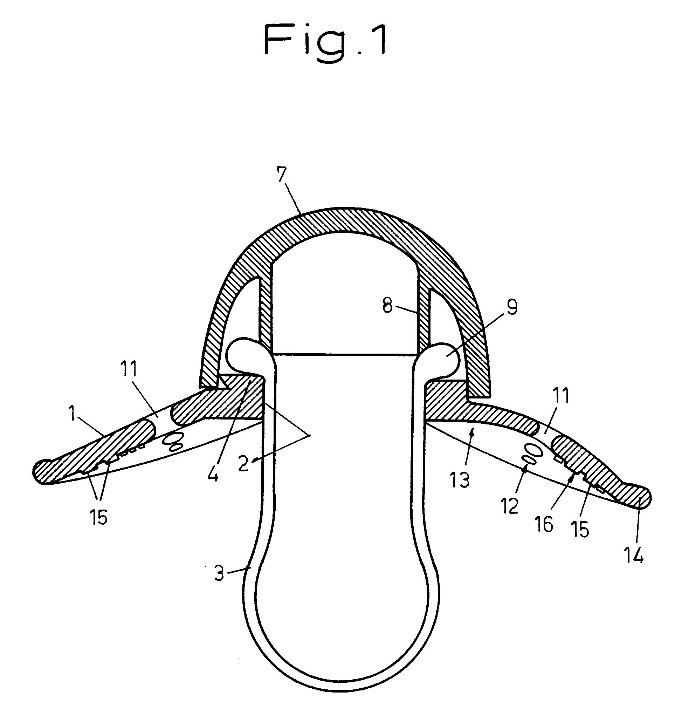

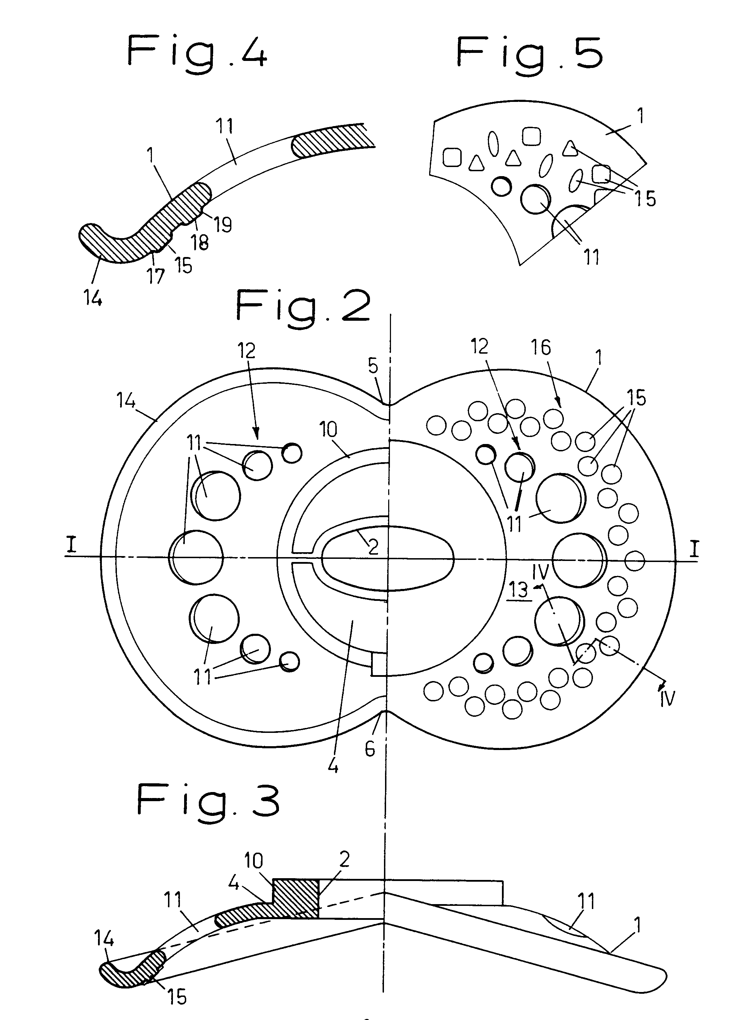

Der aus Fig. 1 ersichtliche Schnuller weist beispielsweise einen allgemeinen Aufbau auf, der im Prinzip jenem des Schnullers gemäß der AT-PS 379 508 entspricht. Im einzelnen weist dieser Schnuller einen Schild 1 auf, der mittig mit einer Öffnung 2 versehen ist, in der ein hohler Sauger 3 aus Silikongummi, Kautschuk oder dergl. Material befestigt ist. Dieser Sauger 3 hat einen ungefähr ovalen Querschnitt, und demgemäß hat auch die mittige Öffnung 2 eine allgemein ovale Form, wie aus Fig. 2 ersichtlich ist. Der Schild 1 ist in der die mittlere Öffnung 2 umgebenden, ungefähr kreisförmigen Zone 4 (s. Fig. 1 und 2) annähernd flach. Von dieser mittigen Zone 4 weg verläuft der Schild 1 bezüglich des Saugers 3 konkav gewölbt, wobei insgesamt, wie aus Fig. 2 ersichtlich ist, eine lemniskatenförmige Gestalt des Schildes 1 vorgesehen ist. Diese Lemniskatenform führt zu Einbuchtungen 5, 6 (Fig. 2), die beim Gebrauch des Schnullers einen Platz für die Nase des Kindes freilassen und so auch die richtige Positionierung des Schullers im Mund bewirken.

An der vom Sauger 3 abgewandten Seite, der Außenseite, ist am Schild 1 eine haubenförmige, beispielsweise ungefähr halbkugelförmige Kappe 7 befestigt, die innen einen rohrförmigen Klemmfortsatz 8 mit ovalem Querschnitt aufweist, der dazu dient, einen dickeren Abschlußwulst 9 des Saugers 3 gegen den verdickten Rand der mittigen Öffnung 2 an der Außenseite des Schildes 1 zu klemmen. Zur Befestigung der Kappe 7 kann der Schild 1 an seiner Außenseite beispielsweise eine ringförmige, aus dem Material des Schildes 1 geformte Leiste 10 aufweisen, an deren Außenumfang die Kappe 7 beispielsweise durch Ultraschallschweißen oder Kleben befestigt wird. In dieser befestigten Position der Kappe 7 klemmt wie erwähnt der Fortsatz 8 den Abschlußwulst 9 gegen den verdickten Rand der Öffnung 2, wobei der Wulst 9 verhindert, daß der Sauger 3 durch die Öffnung 2 aus dem Schild 1 herausgezogen werden kann. An sich sind selbstverständlich aber auch andere Befestigungstechniken zum Festhalten des Saugers 3 im Schild 1 möglich, wie z.B. eine Befestigung mit Hilfe von keilförmigen Stöpseln oder Zwingen, die wie an sich bekannt in den Sauger hineinragen und den Sauger gegen die Wand der Öffnung 2 klemmen. In ähnlicher Weise könnte im übrigen der Schnuller selbstverständlich auch einen prizipiell anderen Aufbau, etwa ohne Kappe 7 haben, wobei anstattdessen dann beispielsweise ein Ring oder ein anderes Halteelement vorgesehen sein kann, wie dies an sich ebenfalls bekannt ist.

Im Schild 1 sind radial außerhalb der annähernd flachen, kreisförmigen Zone 4 beispielsweise kreisförmige Durchbrechungen 11 vorgesehen, die im vorliegenden Ausführungsbeispiel, vgl. Fig. 2, mit ihren Mitten entsprechend zwei die mittlere Zone 4 seitlich umschließenden Bögen angeordnet sind, weiters von der Längsmittellinie I-I (Fig. 2) weggehend abnehmende Durchmesser haben und so eine ungefähr sichelförmige Zone von Durchbrechungen 11 definieren, die allgemein mit 12 bezeichnet ist. Wenn wie gezeigt die Durchmesser der kreisförmigen Durchbrechungen 11 von der Längsachse I-I weg zunehmend kleiner werden, ferner die Durchbrechungen 11 untereinander ungefähr gleiche Abstände haben und, wie gezeigt, ungefähr äquidistant zur lemniskatenförmigen Umrißlinie des Schildes 1 verlaufen, so entspricht dies, wie sich gezeigt hat, in grober Annäherung der Intensität des Speichelflusses, der mit Hilfe der Durchbrechungen 11 abzuführen oder abzutrocknen ist, und der in den Mundwinkeln am größten ist; deshalb sind auch, wie aus Fig. 2 ersichtlich, die auf der Längsachse I-I liegenden kreisförmigen Durchbrechungen 11 am größten. Die Durchbrechungen 11 haben im übrigen auch die Funktion von Notatmungsöffnungen, wenn der Schnuller samt Schild 1 zur Gänze vom Kind in den Mund genommen wird oder gar in den Rachen gelangt. Im übrigen muß die Form der Durchbrechungen 11 nicht unbedingt kreisförmig sein, vielmehr sind auch andere Formen möglich, wie z.B. ovale Durchbrechungen, recheckige Durchbrechungen mit abgerundeten Ecken, rautenförmige Durchbrechungen usw.

Zwischen den beiden die Durchbrechungen 11 aufweisenden, wie erwähnt ungefähr sichelförmigen Zonen 12 und der mittleren, ebenen Zone 4 bzw. der mittigen Öffnung 2 liegt eine glatte, in Ansicht ungefähr ovale Schildzone 13, deren längere Erstreckung in Richtung der Längachse I-I des Schildes 1 liegt. Die Abmessungen können dabei so gewählt sein, daß die größte Längserstreckung dieser ungefähr ovalen Schildzone 13, also in Richtung der Längsache I-I, ungefähr der Größe eines Kindermundes entspricht, so daß tatsächlich die auf der Längsachse I-I liegenden größten Durchbrechungen 11 im Bereich der Mundwinkel zu liegen kommen, wodurch auf jeden Fall ein Vorquellen der Lippen durch die Durchbrechungen 11 verhindert wird. Außerdem wird hiedurch ein Abschluß der Lippen des Kindes erreicht, so daß das Kind gezwungen wird, durch die Nase zur atmen.

Zwischen der äußeren Begrenzungslinie der Durchbrechungen 11, d.h. der gedachten sichelförmigen Zonen 12, und dem äußeren Rand 14 des Schildes 1, der in an sich herkömmlicher Weise etwas zur Außenseite hin abgewinkelt sein kann, wie aus den Fig. 1, 3 und 4 hervorgeht, ist auf der dem Mund zuzuwendenden Seite des Schildes 1, der Innenseite, eine Zone von von der Fläche des Schildes 1 vorspringenden Noppen 15 vorgesehen. Im einzelnen sind außerhalb der beiden mit den Durchbrechungen 11 versehenen sichelförmigen Zonen 12 ungefähr kreisbogenförmige Zonen 16 mit Noppen 15 vorhanden, wobei sich diese Noppenzonen 16 radial auswärts bis praktisch an den abgewinkelten Schildrand 14 erstrecken. Die Anordnung der Noppen 15 kann dabei, wie aus Fig. 2 ersichtlich, derart sein, daß zwei gegeneinander versetzte Reihen von Noppen 15 vorliegen, die je Reihe mit ihren Mitten auf einer annähernd kreisbogenförmigen Linie liegen. Selbstverständlich können jedoch auch andere Formen für die Anordnung der Noppen 15 vorgesehen werden, und im Einzelfall wird die Anordnung der Noppen auch mit der jeweils konkreten Form der Noppen 15 zusammenhängen. Im vorliegenden, derzeit bevorzugten Ausführungsbeispiel sind die Noppen 15 zylindrisch, mit kreisförmiger Basis, wobei sie aus dem Material des Schildes 1 mit abgerundeten, hohlkehlenartigen Übergängen 17 geformt sind, und wobei ihre Oberfläche 18 glatt und der konkaven Krümmung des Schildes 1 angepaßt ist. Die Noppen 15 sind dabei weiters mit abgerundeten vorderem Kanten 19 versehen, um so die Haut des Kindes zu schonen und ein reizungsfreies Gleiten des Noppenoberfläche auf der Haut sicherzustellen.

Selbstverständlich können die Noppen 15 auch anders ausgebildet sein, etwa warzenförmig sein, oder aber zylindrisch, jedoch mit einer elliptischen Basis bzw. prismatisch, mit einer ungefähr rautenförmigen, rechteckigen oder quadratischen oder aber dreieckigen, aber auch sechseckigen usw. Basis, vgl. auch die schematische Darstellung in Fig. 5, in der beispielhaft verschiedene andere mögliche Noppenformen gezeigt sind. Es sei dabei darauf hingewiesen, daß in der Regel an einem bestimmten Schullerschild 1 nur eine bestimmte Noppenform, z.B. kreiszylindrisch, vorgesehen sein wird, daß es aber durchaus auch denkbar ist, an ein und demselben Schnullerschild 1 Noppen in verschiedenen Formen, z.B. kreiszylindrisch und zylindrisch mit elliptischer Basis, in Kombination vorzusehen.

Die Höhe der Noppen, ebenso wie die Fläche, die durch die Noppen 15 insgesamt im Verhältnis zur übrigen Schildfläche in den Zonen 16 festgelegt wird, bestimmt sich unter anderem nach der Größe des Schnullers, nach der Gesamtquerschnittsfläche der Durchbrechungen 11, wie auch nach der Form des Schnullerschildes. Dabei ist ersichtlich ein breiter Bereich von Gestaltungsmöglichkeiten gegeben, und es ist bei der Formgebung und Anordnung der Noppen 15 im wesentlichen nur darauf zu achten, daß einerseits eine reizungsfreie Anlage der Noppen 15 an der Haut und andererseits ein ausreichendes Ableiten von Speichel, der nicht bereits durch die Durchbrechungen 11 abgeleitet wurde, sichergestellt werden. Beispielsweise können die Noppen, etwa in einer Anordnung wie in Fig. 2 gezeigt, einen Durchmesser von ungefähr 2 bis 3 mm bei einer Höhe von ungefähr 0,5 mm aufweisen.

## Patentansprüche

1. Schnuller mit einem Sauger (3), der in einer mittigen Öffnung (2) eines Schildes (1) befestigt ist, der im Abstand von dieser mittigen Öffnung (2) Durchbrechungen (11) aufweist, dadurch gekennzeichnet, daß der Schild (1) auf der beim Gebrauch dem Mund zugewandten Innenseite radial außerhalb der mit den Durchbrechungen (11) versehenen Zone (12) eine mit Noppen (15) versehene Zone (16) aufweist.

2. Schnuller nach Anspruch 1, dadurch gekennzeichnet, daß die mit den Noppen (15) versehene Zone (16) radial außerhalb der mit den Durchbrechungen (11) versehenen Zone (12) unmittelbar an letztere anschließt, jedoch radial innerhalb dieser mit den Durchbrechungen (11) versehene Zone (12) eine die mittige Öffnung (2) für den Sauger (3) umgebende glatte, in Ansicht ungefähr ovale Schildzone (13) vorgesehen ist.

3. Schnuller nach Anspruch 2, dadurch gekennzeichnet, daß die größte Erstreckung der ungefähr ovalen, glatten Schildzone (13) in der Längsachse (I-I) des oval bis lemniskatenförmig ausgeführten Schildes (1) liegt.

4. Schnuller nach einem der Ansprüche 1 bis 3, dadurch gekennzeichnet, daß sich die mit den Noppen (15) versehene Zone (16) im wesentlichen bis an den Rand (14) des Schildes (1) erstreckt.

5. Schnuller nach einem der Ansprüche 1 bis 4, dadurch gekennzeichnet, daß die Noppen (15) die Form von Zylindern mit kreisförmiger Basis haben.

6. Schnuller nach einem der Ansprüche 1 bis 4, dadurch gekennzeichnet, daß die Noppen (15) die Form von Zylindern mit elliptischer Basis haben.

7. Schnuller nach einem der Ansprüche 1 bis 4, dadurch gekennzeichnet, daß die Noppen (15) eine prismatische Form, z.B. mit quadratischer, rechteckiger, dreieckiger oder rautenförmiger Basis, haben.

8. Schnuller nach einem der Ansprüche 1 bis 7, dadurch gekennzeichnet, daß die Oberfläche (18) der Noppen (15) glatt ist.

9. Schnuller nach einem der Ansprüche 1 bis 8, dadurch gekennzeichnet, daß die Noppen (15) abgerundete Kanten (19) und Ränder (17) haben.

10. Schnuller nach einem der Ansprüche 1 bis 9, dadurch gekennzeichnet, daß alle Noppen (15) im wesentlichen gleich hoch sind.

11. Schnuller nach einem der Ansprüche 1 bis 10, dadurch gekennzeichnet, daß die Noppen (15) aus dem Material des Schildes (1) ausgeformt sind.

## Claims

1. A pacifier including a nipple (3) fastened in a central opening (2) of a shield (1) having perforations (11) at a distance from this central opening (2), characterized in that the shield (1), on its inner side facing the mouth when in use, comprises a zone (16) provided with nubs (15) radially outwardly of the zone (12) provided with the perforations (11).

2. A pacifier according to claim 1, characterized in that the zone (16) provided with the nubs (15) immediately joins the zone (12) provided with the perforations (11) radially outwardly of the latter, yet a smooth shield zone (13) is provided radially inwardly of the zone (12) provided with the perforations (11), which is approximately oval in elevation and surrounds the central opening (2) for the nipple (3).

3. A pacifier according to claim 2, characterized in that the largest extension of the approximately oval smooth shield zone (13) is located in the longitudinal axis (I-I) of the oval to lemniscate-shaped shield (1).

4. A pacifier according to claims 1 to 3, characterized in that the zone (16) provided with the nubs (15) substantially extends as far as to the edge (14) of the shield (1).

5. A pacifier according to claims 1 to 4, characterized in that the nubs (15) have the form of cylinders having circular bases.

6. A pacifier according to claims 1 to 4, characterized in that the nubs (15) have the form of cylinders having elliptic bases.

7. A pacifier according to claims 1 to 4, characterized in that the nubs (15) have prismatic shapes, e.g., with square, rectangular, triangular or rhomboid bases.

8. A pacifier according to claims 1 to 7, characterized in that the surface (18) of the nubs (15) is smooth.

9. A pacifier according to any one of claims 1 to 8, characterized in that the nubs (15) have rounded edges (19) and verges (17).

10. A pacifier according to any one of claims 1 to 9, characterized in that all of the nubs (15) are substantially equal in height.

11. A pacifier according to any one of claims 1 to 10, characterized in that the nubs (15) are molded of the material of the shield (1).

## Revendications

1. Tétine comprenant une sucette (3) qui est serrée dans un orifice central (2) d'une plaque (1) présentant des ajours (11) séparés de cet orifice central (2), caractérisée en ce que la plaque (1) présente sur sa face intérieure qui se trouve en regard de la bouche en usage, une zone (16) pourvue de noppes (15) située radialement en dehors de la zone (12) pourvue des ajours (11).

2. Tétine selon la revendication 1, caractérisée en ce que la zone (16) pourvue des noppes (15) se rattache directement à la zone (12) pourvue des ajours (11) radialement en dehors de cette dernière, cependant qu'une zone de plaque lisse de forme approximativement ovale (13), en vue d'élévation, est prévue radialement en dedans de cette zone (12) pourvue des ajours (11) de manière à entourer l'orifice central (2) pour la sucette (3).

3. Tétine selon la revendication 2, caractérisée en ce que l'extension la plus grande de la zone de plaque lisse de forme approximativement ovale (13) est située dans l'axe longitudinal (I-I) de la plaque (1) conformée en un ovale ou une lemniscate.

4. Tétine selon une des revendications 1 à 3, caractérisée en ce que la zone (16) pourvue des noppes (15) s'étend sensiblement jusqu'au bord (14) de la plaque (1).

5. Tétine selon une des revendications 1 à 4, caractérisée en ce que les noppes (15) ont la forme des cylindres ayant des bases circulaires.

6. Tétine selon une des revendications 1 à 4, caractérisée en ce que les noppes (15) ont la forme des cylindres ayant des bases elliptiques.

7. Tétine selon une des revendications 1 à 4, caractérisée en ce que les noppes (15) ont une forme prismatique ayant, par exemple, une base carrée, rectangulaire, triangulaire ou rhombique.

8. Tétine selon une des revendications 1 à 7, caractérisée en ce que la surface (18) des noppes (15) est lisse.

9. Tétine selon une des revendications 1 à 8, caractérisée en ce que les noppes (15) ont des arêtes (19) et des bords (17) arrondis.

10. Tétine selon une des revendications 1 à 9, caractérisée en ce que toutes les noppes (15) ont une hauteur sensiblement égale.

11. Tétine selon une des revendications 1 à 10, caractérisée en ce que les noppes (15) sont réaliées en matière de la plaque (1).
